# EUROPEAN PATENT APPLICATION

(11) **EP 4 319 244 A1**
(43) Date of publication of application: **07.02.2024**
(21) Application number: 21934053.6
(22) Date of filing: 02.04.2021
(51) Int. Cl.: H04W 24/00

(54) **SIGNAL MEASUREMENT METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HU, Ziquan, Beijing 100085 (CN)
(74) Representative: Gunzelmann, Rainer
(86) International application number: PCT/CN2021/085162
(87) International publication number: WO 2022/205396

(57) **Abstract**

The embodiments of the present disclosure relate to a signal measurement method and apparatus, a communication device, and a storage medium: on the basis of a characterisation parameter associated with radio link transmission quality, implementing radio link monitoring (RLM) measurement of a radio link.

## Description

### TECHNICAL FIELD

The disclosure relates to a field of wireless communication technology, but is not limited to the field of wireless communication technology, in particular to a method and an apparatus for signal measurement, a communication device and a storage medium.

### BACKGROUND

The New Radio (NR) system in the fifth generation (5G, 5th Generation) mobile communication technology supports larger bandwidth and richer types of services compared to the Long Term Evolution (LTE) system. This leads to a significant increase in power consumption and shortened battery life of user equipment (UE) such as a terminal, which has a significant impact on user experience and related service deployment. Reducing the power consumption of a NR UE is an urgent problem to be solved.

### SUMMARY

For this, embodiments of the disclosure provide method and an apparatus for signal measurement, a communication device and a storage medium.

According to a first aspect of embodiments of the disclosure, a method for signal measurement is provided. The method includes:
performing a radio link monitoring (RLM) measurement on a radio link according to a representation parameter related to transmission quality of the radio link.

In an embodiment, performing the RLM measurement on the radio link based on the representation parameter related to transmission quality of the radio link includes:
performing a first RLM measurement or a second RLM measurement on the radio link according to the representation parameter related to transmission quality of the radio link, in which a measurement requirement of the first RLM measurement is different from a measurement requirement of the second RLM measurement.

In an embodiment, performing the first RLM measurement or the second RLM measurement on the radio link according to the representation parameter related to transmission quality of the radio link includes one of:
performing the first RLM measurement in response to a block error rate (BLER) being lower than or equal to a first threshold and/or a radio link failure timer being not activated; or
performing the second RLM measurement in response to satisfying at least one of: the BLER being higher than or equal to a second threshold, the radio link failure timer being activated, or a predetermined number of out-of-synchronization indications being received;
in which, the first threshold is smaller than the second threshold, and the measurement requirement of the second RLM measurement is stricter than the measurement requirement of the first RLM measurement.

In an embodiment, performing the first RLM measurement in response to the BLER being lower than or equal to the first threshold and/or the radio link failure timer being not activated includes:
triggering a physical layer to perform the first RLM measurement in response to a radio resource control (RRC) layer receiving N indications from the physical layer, the indications indicating that the BLER is lower than or equal to the first threshold, and/or the RRC layer determining that the radio link failure timer is not activated, where N is a positive integer.

In an embodiment, performing the first RLM measurement in response to the BLER being lower than or equal to the first threshold and/or the radio link failure timer being not activated includes:
performing the first RLM measurement by a physical layer in response to the physical layer determining that the BLER is lower than or equal to the first threshold and/or that the radio link failure timer is not activated.

In an embodiment, performing the first RLM measurement by the physical layer in response to the physical layer determining that the BLER is lower than or equal to the first threshold and/or that the radio link failure timer is not activated includes:
performing the first RLM measurement by the physical layer in response to the physical layer determining that the BLER is lower than or equal to the first threshold within a predetermined period of time and/or that the radio link failure timer is not activated.

In an embodiment, the method further includes at least one of:
obtaining the first threshold by the physical layer from a higher layer through an interlayer interface; or
obtaining information indicating a status of the radio link failure timer by the physical layer from the higher layer through the interlayer interface.

In an embodiment, the measurement requirement of the second RLM measurement being stricter than the measurement requirement of the first RLM measurement, includes at least one of:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

In an embodiment, the out-of-synchronization evaluation cycle of the first RLM measurement is i times the out-of-synchronization evaluation cycle of the second RLM measurement, where i is a real number greater than 1; or
the in-synchronization evaluation cycle of the first RLM measurement is j times the in-synchronization evaluation cycle of the second RLM measurement, where j is a real number greater than 1;
the reporting interval of the first RLM measurement is k times the reporting interval of the second RLM measurement, where k is a real number greater than 1.

In an embodiment, performing the first RLM measurement in response to the BLER being lower than or equal to the first threshold and/or the radio link failure timer being not activated includes:
performing the first RLM measurement with a first measurement requirement in response to the BLER being less than or equal to a third threshold; or
performing the first RLM measurement with a second measurement requirement in response to the BLER being less than or equal to a fourth threshold and less than an out-of-synchronization threshold;
in which, the third threshold is less than the fourth threshold, the fourth threshold is less than or equal to the first threshold, and the second measurement requirement is stricter than the first measurement requirement.

In an embodiment, an out-of-synchronization evaluation cycle required by the first measurement requirement is greater than an out-of-synchronization evaluation cycle required by the second measurement requirement;
an in-synchronous evaluation cycle required by the first measurement requirement is greater than an in-synchronous evaluation cycle required by the second measurement requirement;
a number of reference signals required by the first measurement requirement is less than a number of reference signals required by the second measurement requirement; or
a frequency domain range required by the first measurement requirement is smaller than a frequency domain range required by the first measurement requirement.

According to a second aspect of embodiments of the disclosure, an apparatus for signal measurement is provided. The apparatus includes: a measurement module.

The measurement module is configured to perform a radio link monitoring (RLM) measurement on a radio link according to a representation parameter related to transmission quality of the radio link.

In an embodiment, the measurement module includes:
a measurement sub module, configured to perform a first RLM measurement or a second RLM measurement on the radio link according to the representation parameter related to transmission quality of the radio link, in which a measurement requirement of the first RLM measurement is different from a measurement requirement of the second RLM measurement.

In an embodiment, the measurement sub module includes one of:
a first measurement unit, configured to perform the first RLM measurement in response to a block error rate (BLER) being lower than or equal to a first threshold and/or a radio link failure timer being not activated; or
a second measurement unit, configured to perform the second RLM measurement in response to the BLER being higher than or equal to a second threshold, and/or the radio link failure timer being activated, and/or a predetermined number of out-of-synchronization indications being received;
in which, the first threshold is smaller than the second threshold, and the measurement requirement of the second RLM measurement is stricter than the measurement requirement of the first RLM measurement.

In an embodiment, the first measurement unit includes:
a first measurement sub unit, configured to trigger a physical layer to perform the first RLM measurement in response to a radio resource control (RRC) layer receiving N indications from the physical layer, the indications indicating that the BLER is lower than or equal to the first threshold, and/or the RRC layer determining that the radio link failure timer is not activated, where N is a positive integer.

In an embodiment, the first measurement unit includes:
a second measurement sub unit, configured to perform the first RLM measurement by a physical layer in response to the physical layer determining that the BLER is lower than or equal to the first threshold and/or that the radio link failure timer is not activated.

In an embodiment, the second measurement sub unit is configured to: perform the first RLM measurement by the physical layer in response to the physical layer determining that the BLER is lower than or equal to the first threshold within a predetermined period of time and/or that the radio link failure timer is not activated.

In an embodiment, the apparatus further includes at least one of:
a first obtaining module, configured to obtain the first threshold by the physical layer from a higher layer through an interlayer interface; or
a second obtaining module, configured to obtain information indicating a status of the radio link failure timer by the physical layer from the higher layer through the interlayer interface.

In an embodiment, the measurement requirement of the second RLM measurement being stricter than the measurement requirement of the first RLM measurement, includes at least one of:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

In an embodiment, the out-of-synchronization evaluation cycle of the first RLM measurement is i times the out-of-synchronization evaluation cycle of the second RLM measurement, where i is a real number greater than 1; or
the in-synchronization evaluation cycle of the first RLM measurement is j times the in-synchronization evaluation cycle of the second RLM measurement, where j is a real number greater than 1;
the reporting interval of the first RLM measurement is k times the reporting interval of the second RLM measurement, where k is a real number greater than 1.

In an embodiment, the measurement sub module includes:
a third measurement unit, configured to perform the first RLM measurement with a first measurement requirement in response to the BLER being less than or equal to a third threshold; or
a fourth measurement unit, configured to perform the first RLM measurement with a second measurement requirement in response to the BLER being less than or equal to a fourth threshold and less than an out-of-synchronization threshold;
in which, the third threshold is less than the fourth threshold, the fourth threshold is less than or equal to the first threshold, and the second measurement requirement is stricter than the first measurement requirement.

In an embodiment, an out-of-synchronization evaluation cycle required by the first measurement requirement is greater than an out-of-synchronization evaluation cycle required by the second measurement requirement;
an in-synchronous evaluation cycle required by the first measurement requirement is greater than an in-synchronous evaluation cycle required by the second measurement requirement;
a number of reference signals required by the first measurement requirement is less than a number of reference signals required by the second measurement requirement; or
a frequency domain range required by the first measurement requirement is smaller than a frequency domain range required by the first measurement requirement.

According to a third aspect of embodiments of the disclosure, a communication device is provided. The communication device includes a processor, a memory and executable programs stored on the memory and executable by the processor. When the processor executes the executable programs, steps of the method for signal measurement according to the first aspect is performed.

According to a fourth aspect of embodiments of the disclosure, a storage medium having executable programs stored thereon is provided. When the executable programs are executed by a processor, steps of the method for signal measurement according to the first aspect is performed.

With the method and apparatus for signal measurement, the communication device and the storage medium provided in the embodiments of the disclosure, the RLM measurement is performed on the radio link according to the representation parameter related to the transmission quality of the radio link. In this way, a use equipment (UE) can determine to perform the RLM measurement based on the representation parameter. On the one hand, the UE is no longer fixed to one type of RLM measurement and can select different RLM measurements, improving the flexibility of the UE in performing the RLM measurement. On the other hand, the UE can select the RLM measurement that is suitable for the current transmission quality of the radio link. By selecting different RLM measurements, the power consumption of the RLM measurement can be adjusted to save power.

It is understandable that the above general description and the following detailed descriptions are exemplary and explanatory only and are not used to limit the disclosure.

### BRIEF DESCRIPTION OF THE DRAWINGS

The accompanying drawings, which are incorporated in and constitute a part of this description, illustrate embodiments consistent with the disclosure and together with the description serve to explain the principles of the disclosure.
FIG. 1 is a structural diagram of a wireless communication system according to an embodiment of the disclosure.
FIG. 2 is a flowchart of a method for signal measurement according to an embodiment of the disclosure.
FIG. 3 is a block diagram of an apparatus for signal measurement according to an embodiment of the disclosure.
FIG. 4 is block diagram of a device for signal measurement according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the embodiments of the disclosure. Instead, they are merely examples of apparatuses and methods consistent with aspects related to the embodiments of disclosure as recited in the appended claims.

The terms used in the embodiments of the disclosure are only for the purpose of describing specific embodiments, and are not intended to limit the embodiments of the disclosure. The singular forms of "a" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

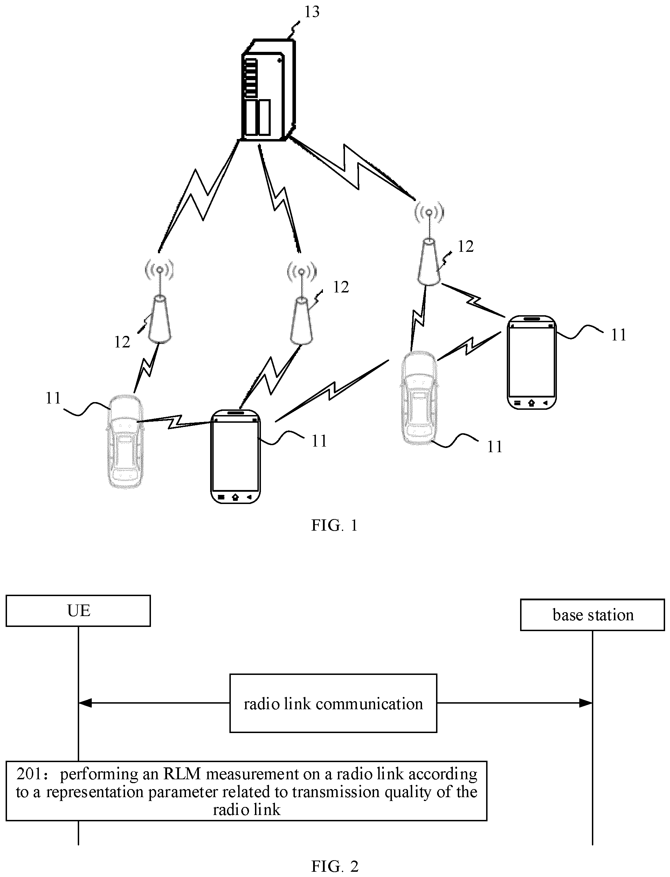

FIG. 1 is a schematic diagram of a wireless communication system according to an embodiment of the disclosure. As illustrated in FIG. 1, the wireless communication system is a communication system based on cellular mobile communication technology. The wireless communication system may include: a plurality of terminals 11 and a plurality of base stations 12.

The terminal 11 may be a device that provides voice and/or data connectivity to a user. The terminal 11 may communicate with one or more core networks via a Radio Access Network (RAN). The terminal 11 may be an Internet of Things (IoT) terminal, such as a sensor device, a mobile phone (or "cellular" phone), and a computer with an IoT terminal. The terminal 11 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment (UE). Or, the terminal 11 may be an unmanned aerial vehicle device. Or, the terminal 11 may be an in-vehicle device, for example, an electronic control unit (ECU) having a wireless communication function, or a wireless communication device external to the ECU. Or, the terminal 11 can also be a roadside device, for example, a street light, a signal light, or other roadside devices having the wireless communication function.

The base station 12 may be a network side device in the wireless communication system. The wireless communication system may be the 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. The access network in the 5G system may be called a New Generation-RAN (NG-RAN) or a machine type communication (MTC) system.

The base station 12 can be an evolved access device (eNB) employed in the 4G system. Or, the base station 12 may be an access device (gNB) with a centralized distributed architecture employed in the 5G system. When the base station 12 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the base station 12 is not limited in the embodiment of the disclosure.

A wireless connection can be established between the base station 12 and the terminal 11 via a radio interface. In different implementations, the radio interface is a radio interface based on the 4G standard. Or, the radio interface is a radio interface based on the 5G standard, such as a NR. Or, the radio interface may also be a radio interface based on the standard of the next generation of 5G.

In some embodiments, End to End (E2E) connections can also be established between the terminals 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of base stations 12 are connected to the network management device 13 respectively. The network management device 13 may be a core network device in the wireless communication system, for example, a Mobility Management Entity (MME) in an Evolved Packet Core (EPC). Or, the network management device may be other core network devices, such as a Serving GateWay (SGW), a Public Data Network GateWay (PGW), a Policy and Charging Rules Function (PCRF), or a Home Subscriber Server (HSS), etc. The implementation form of the network management device 13 is not limited in the embodiments of the disclosure.

An execution entity involved in embodiments of the disclosure includes but is not limited to a UE such as a mobile terminal that supports cellular mobile communication.

An application scenario of an embodiment of the disclosure is that, in a 5G NR system, in order to ensure the quality of downlink communication in a serving cell, Radio Link Monitoring (RLM) is defined.

The UE periodically measures a reference signal of the RLM, such as a Synchronization Signal / Physical Broadcast Channel block (SS/PBCH block, SSB) and/or a Channel State Information Reference Signal (CSI-RS). An RLM measurement result is a signal-to-noise ratio (SINR) value of the reference signal, and a block error rate (BLER) value corresponding to the SINR is compared with both an in-synchronization threshold (Qᵢₙ) and an out-of-synchronization threshold (Qₒᵤₜ), to determine an in-synchronization (IS, In-Sync) status/ an out-of-synchronization (OOS, Out-Of-Sync) status of the UE. The physical layer may provide the determined IS indication / OOS indication to the radio resource control (RRC) layer, which may as following 1-3.
1. It is evaluated whether the BLER value is higher than the threshold Qₒᵤₜ within an Out-Of-Sync evaluation cycle T_{Evaluate_out}. If all measurement results are higher than or equal to the Qₒᵤₜ, the OOS indication is reported from an L1 layer to an L3 layer.
2. It is evaluated whether the BLER value is lower than the threshold Qᵢₙ within an In-Sync evaluation cycle T_{Evaluate_in}. If any measurement result is lower than or equal to the Qᵢₙ, L1 may report the IS indication to L3.
3. At a reporting interval T_{indication-RLM}, i.e., each T_{indication-RLM} the time period, the UE reports the IS instructions/OOS instruction to a higher layer.

When the RRC layer receives N310 consecutive OOS indications, the UE starts to activate a radio link failure (RLF) timer T310 configured by the network. If the RRC layer receives N311 consecutive IS indications reported by the physical layer before the expiration of T310, timing of the T310 is stopped. If T310 expires, the UE reports an RLF. N310, N311, and T310 may be customized. A value of N310 may range from 1 to 20, such as being 8. A value of N311 may range from 1 to 10, such as being 5. A value of T310 may range from 0 milliseconds to 6 seconds, such as being 500 milliseconds.

As shown in FIG. 2, an embodiment of the disclosure provides a method for signal measurement, performed by a base station in wireless communication. The method includes the following steps.

Step 201: an RLM measurement is performed on a radio link according to a representation parameter related to transmission quality of the radio link.

A UE may be a mobile terminal that uses cellular mobile communication technology for wireless communication. The base station may send signals such as an RLM reference signal to the UE through the radio link, and the UE measures the signals and determines the transmission quality of the radio link. The transmission quality of the radio link can be indicated by different representation parameters. The representation parameter related to the transmission quality of the radio link may include a representation parameter indication that indicates the transmission quality of the radio link.

In an embodiment, the representation parameter related to the transmission quality of the radio link includes but is not limited to: a BLER, a status of a radio link failure timer, an IS indication, and/or an OOS indication, etc.

The BLER may be determined by the UE based on a measured SINR of the radio link, in combination with a wireless signal receiver of the UE. The BLER of the UE varies for different SINRs. The BLER may be used to indicate a percentage of erroneous data blocks in all sent data blocks.

The status of the radio link failure timer may be used to indicate a probability of out of synchronization. For example, if the radio link failure timer is in an activated state, it can be determined that the probability of out of synchronization is high; If the radio link failure timer is in a non-activated state, it can be determined that the probability of out of synchronization is low.

The IS indication and/or OOS indication may be used to evaluate the BLER. The IS indication may indicate that the BLER is in a good state and has a low probability of out of synchronization. The OOS indication may indicate that the BLER is in a poor state and has a high probability of out of synchronization.

In summary, the representation parameters can indicate the transmission quality of the radio link.

The UE can select to perform an RLM measurement that is suitable for measuring the transmission quality of the current radio link. The UE can determine whether to perform the RLM measurement, as well as a measurement requirement, a cycle, etc., for performing the RLM measurement.

For example, an RLM measurement with a relaxed measurement requirement may be adopted for a situation where the transmission quality of the radio link is high, and an RLM measurement with a strict measurement requirement may be adopted for a situation where the transmission quality of the radio link is low. Generally, a power consumption for performing the RLM measurement with the relaxed measurement requirement by the UE is lower than a power consumption for performing the RLM measurement with the strict measurement requirement by the UE.

In this way, the UE determines to perform the RLM measurement based on the representation parameter. On the one hand, the UE is no longer fixed to one type of RLM measurement and can select different RLM measurements, improving the flexibility of the UE in performing the RLM measurement. On the other hand, the UE can select the RLM measurement that is suitable for the current transmission quality of the radio link. By selecting different RLM measurements, the power consumption of the RLM measurement can be adjusted to save power.

In an embodiment, performing the RLM measurement on the radio link based on the representation parameter related to the transmission quality of the radio link includes:
performing a first RLM measurement or a second RLM measurement on the radio link according to the representation parameter related to the transmission quality of the radio link. A measurement requirement of the first RLM measurement is different from a measurement requirement of the second RLM measurement.

The measurement requirements of the first RLM measurement and the second RLM measurement may be determined based on different transmission qualities. For a situation with poor transmission quality, a strict measurement requirement can be configured. The measurement requirement may include a time domain range and/or a frequency domain range of the RLM measurement.

The representation parameter related to the transmission quality of the radio link detected by the UE may be determined when the UE performs the first RLM measurement or when the UE performs the second RLM measurement.

Different RLM measurements, i.e., the first RLM measurement and the second RLM measurement, may be adopted for the radio link with different transmission quality states.

The UE may switch from the currently performed first RLM measurement to the second RLM measurement, or switch from the currently performed second RLM measurement to the first RLM measurement. The UE can maintain the currently performed first RLM measurement or the currently performed second RLM measurement.

In practical applications, a condition for selecting whether to perform the first RLM measurement or the second RLM measurement on the radio link may be agreed based on network configuration or a protocol.

In this way, the UE determines to perform different RLM measurements based on the representation parameters. On the one hand, the UE is no longer fixed to one RLM measurement and can select different RLM measurements, improving the flexibility of the UE in performing the RLM measurement. On the other hand, the UE can select the RLM measurement that is suitable for the transmission quality of the current radio link. By selecting different RLM measurements, the power consumption of the RLM measurement can be adjusted to save power.

In an embodiment, performing the first RLM measurement or the second RLM measurement on the radio link according to the representation parameter related to transmission quality of the radio link includes one of the following:
performing the first RLM measurement in response to the BLER being lower than or equal to a first threshold, and/or the radio link failure timer being not activated; or
performing the second RLM measurement in response to satisfying at least one of: the BLER being higher than or equal to the second threshold, the radio link failure timer being activated, or a predetermined number of out-of-synchronization indications being received.

The first threshold is smaller than the second threshold, and the measurement requirement of the second RLM measurement is stricter than the measurement requirement of the first RLM measurement.

Compared to the second RLM measurement, the first RLM measurement may be a relaxed RLM measurement.

The first threshold and the second threshold can be configured based on the transmission quality of the radio link. For example, the first threshold can be a BLER when the radio link has good transmission quality, and the second threshold can be a BLER when the radio link has poor transmission quality. When the transmission quality is good and the probability of out-of-synchronization is low, the first RLM measurement with the relaxed measurement requirement can be adopted to perform the measurement of the radio link. When the transmission quality is poor and the probability of out-of-synchronization is high, it is necessary to strictly monitor the transmission quality of the radio link. Therefore, the second RLM measurement with the strict measurement requirement can be adopted to perform the measurement of the radio link.

When the BLER is lower than or equal to the first threshold, it can be determined that the BLER is in a good state and the probability of out-of-synchronization is low. Thus, the first RLM measurement with relaxed measurement requirement can be adopted to perform the measurement of the radio link.

When BLER is higher than or equal to the second threshold, it can be determined that the BLER is in a poor state and the probability of out-of-synchronization is high. Thus, the second RLM measurement with strict measurement requirement can be adopted to perform the measurement of the radio link.

The OOS indication is an indication of a comparison result between the BLER and the out-of-synchronization threshold (Qₒᵤₜ). When the BLER is greater than the Qₒᵤₜ, the OOS indication is sent. When the OOS indication is received, it can be determined that the probability of out of synchronization is high.

When the RRC layer receives N310 OOS indications, it may activate the radio link failure timer. If the RRC layer receives N311 consecutive IS indications reported by the physical layer, RRC stops receiving the N311 consecutive IS indications reported by the physical layer, and timing of the T310 is stopped. Therefore, the status of the radio link failure timer can be used to indicate the probability of out of synchronization.

When the radio link failure timer is not activated, it can be determined that the probability of out of synchronization is high. In this way, the first RLM measurement with relaxed measurement requirement can be adopted for performing the measurement of the radio link.

When the radio link failure timer starts, it can be determined that there is the probability of out of synchronization is high. In this way, the second RLM measurement with strict measurement requirement can be adopted for performing the measurement of the radio link.

If the radio link failure timer is in an activated state, it can be determined that the probability of out of synchronization is high. In this way, the second RLM measurement with strict measurement requirement can be adopted for performing the measurement of the radio link.

If the radio link failure timer is in a non-activated state, it can be determined that the probability of out of synchronization is low. In this way, the first RLM measurement with relaxed measurement requirement can be adopted for performing the measurement of the radio link.

Whether to select the first RLM measurement or the second RLM measurement can be determined based on the BLER, the radio link failure timer, and/or the OOS indication.

For example, when the BLER is lower than or equal to the first threshold and the radio link failure timer is not activated, it can be determined that the probability of out of synchronization is low. In this way, the first RLM measurement with the relaxed measurement requirement can be adopted for performing the measurement of the radio link.

When the BLER is higher than or equal to the second threshold, the radio link failure timer is activated, and an OOS indication is received, it can be determined that the probability of out of synchronization is high. In this way, the second RLM measurement with the strict measurement requirement can be adopted for performing the measurement of the radio link.

In practical applications, if the first RLM measurement is a relaxed RLM measurement, the second RLM measurement is a normal RLM measurement.

When switching from a normal mode to a relaxation mode, the UE may comply with a requirement of an RLM evaluation cycle under the normal mode before switching to an RLM measurement under the relaxation mode.

When switching from the relaxation mode to the normal mode, the UE may perform the RLM measurement according to the requirement of the normal mode when triggering the switch.

If multiple switches are made within one evaluation cycle, no requirement can be defined.

In this way, the UE no longer uses RLM measurements with the same measurement requirements to perform the measurement of the radio link. Instead, the UE uses RLM measurements with different power consumption to monitor the radio link based on different actual conditions of the radio link. By using RLM measurements with different power consumptions, the effect of saving UE power is achieved.

In an embodiment, performing the first RLM measurement in response to the BLER being lower than or equal to the first threshold and/or the radio link failure timer being not activated includes:

triggering the physical layer to perform the first RLM measurement in response to the RRC layer receiving N indications from the physical layer, the indications indicating that the BLER is lower than or equal to the first threshold, and/or the RRC layer determining that the radio link failure timer is not activated, where N is a positive integer.

The process of determining to perform the first RLM measurement can be performed at the RRC layer. That is, the RRC layer determines whether to perform the first RLM measurement based on the BLER and/or the status of the radio link failure timer. The RRC layer notifies the physical layer to perform the first RLM measurement. Compared to the second RLM measurement, the first RLM measurement can be a relaxed RLM measurement.

For example, the RRC layer can determine to perform the first RLM measurement based on following conditions 1 and 2.
1. If the BLER is lower than or equal to the first threshold, the physical layer reports a corresponding first indication to the RRC layer.
2. The RRC layer counts the number of received first indications, and the number reaches to a corresponding threshold N.

When BLER_{Current} ≤ the first threshold, the RRC layer receives the first indication reported by the physical layer, and the RRC layer simultaneously determines whether the T310 is working at this time. If so, a relaxation measurement of the RLM is triggered. The BLER_{Current} represents a BLER corresponding to a current measured SINR value.

Furthermore, the RRC layer can maintain a counter Np1 and increase the counter Np1 by 1 when receiving a power saving indicator reported by the physical layer. When the Np1 reaches a set threshold N, the relaxation measurement of RLM of the RLM is triggered, and the Np1 returns to its default value.

In an embodiment, performing the first RLM measurement in response to the BLER being lower than or equal to the first threshold and/or the radio link failure timer being not activated includes:

performing the first RLM measurement by the physical layer in response to the physical layer determining that the BLER is lower than or equal to the first threshold and/or that the radio link failure timer is not activated

The process of determining to perform the first RLM measurement can be performed at the physical layer. That is, the physical layer determines whether to perform the first RLM measurement based on the BLER and/or the status of the radio link failure timer. When determining to perform the first RLM measurement, it is performed by the physical layer.
1. The first threshold can be maintained by the physical layer, or the first threshold of the BLER can be obtained from a higher layer.
2. The radio link failure timer can be maintained by the physical layer, or the status information of the radio link failure timer T310 can be obtained from the higher layer.

For example, the physical layer obtains the status information of the T310 from the RRC layer. If BLER_{Current} ≤ the first threshold and T310 is not running, the first RLM measurement is triggered.

In an embodiment, performing the first RLM measurement by the physical layer in response to the physical layer determining that the BLER is lower than or equal to the first threshold and/or that the radio link failure timer is not activated includes:
performing the first RLM measurement by the physical layer in response to the physical layer determining that the BLER is lower than or equal to the first threshold within a predetermined period of time and/or that the radio link failure timer is not activated

For example, the physical layer can determine to trigger the first RLM measurement when BLERCurrent ≤ the first threshold within the predetermined period of time T of a timer maintained by the physical layer. The predetermined period of time T can be a newly introduced timer (T_{RLM_delta}), and a value range of T can be 0-1 seconds. For example, T can be taken as 500 milliseconds.

In an embodiment, the method further includes at least one of the following:
obtaining the first threshold by the physical layer from the higher layer through an interlayer interface; or
obtaining information indicating the status of the radio link failure timer by the physical layer from the higher layer through the interlayer interface.

The higher layer can be the RRC layer, etc. The physical layer can obtain the first threshold and/or the information indicating the status of the radio link failure timer through the interlayer interface.

In an embodiment,
that the measurement requirement of the second RLM measurement is stricter than the measurement requirement of the first RLM measurement includes at least one of the following:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

The out-of-synchronization evaluation cycle is used to evaluate whether the BLER is greater than the Qₒᵤₜ. The first RLM measurement can adopt a more relaxed out-of-synchronization evaluation cycle compared to the second RLM measurement, thereby reducing a detection frequency and saving power.

The in-synchronization evaluation cycle is used to evaluate whether the BLER is greater than the Qᵢₙ. The first RLM measurement can adopt a more relaxed in-synchronization evaluation cycle compared to the second RLM measurement, thereby reducing the detection frequency and saving power.

The reporting interval is used for the physical layer to report the IS indication or the OOS indication to the higher layer. The first RLM measurement can use a more relaxed reporting interval compared to the second RLM measurement, thereby reducing a frequency of detection and reporting, and saving power.

The reference signals can include a SSB, a CSI-RS, and/or a Tracking Reference Signal (TRS), etc. The first RLM measurement can use a more relaxed number of measured reference signals compared to the second RLM measurement. For example, the first RLM measurement can measure the SSB only, thereby reducing a measurement load and saving power.

The reference signals can include a SSB, a TRS, and/or a CSI-RS, etc. The first RLM measurement can use a more relaxed number of measured reference signals compared to the second RLM measurement. For example, the first RLM measurement can measure the SSB only, thereby reducing the measurement load and saving power.

The first RLM measurement can adopt a more relaxed frequency domain range compared to the second RLM measurement. For example, the first RLM measurement can reduce a bandwidth part (BWP) of the measurement, thereby reducing the measurement load and saving power.

In an embodiment, the out-of-synchronization evaluation cycle of the first RLM measurement is i times the out-of-synchronization evaluation cycle of the second RLM measurement, where i is a real number greater than 1;

The in-synchronization evaluation cycle of the first RLM measurement is j times the in-synchronization evaluation cycle of the second RLM measurement, where j is a real number greater than 1;

The reporting interval of the first RLM measurement is k times the reporting interval of the second RLM measurement, where k is a real number greater than 1.

A scale factor can be used to scale the out-of-synchronization evaluation cycle, the in-synchronous evaluation cycle, and/or the reporting interval, i.e., to relax the measurement requirement of the RLM measurement.

For example, a scale factor i (i>1) can be used to scale the out-of-synchronization evaluation cycle. A scale factor j (j>1) can be used to scale the in-synchronous evaluation cycle. A scale factor k (k>1) can be used to scale the in-synchronous evaluation cycle. The scale factors i, j, and k can be different from each other, be not all the same, or be all the same.

In an embodiment, performing the first RLM measurement in response to the BLER being lower than or equal to the first threshold and/or the radio link failure timer being not activated includes:
performing the first RLM measurement with a first measurement requirement in response to the BLER being less than or equal to a third threshold; or
performing the first RLM measurement with the second measurement requirement in response to the BLER being less than or equal to a fourth threshold and less than an out-of-synchronization threshold;

The third threshold is less than the fourth threshold, the fourth threshold is less than or equal to the first threshold, and the second measurement requirement is stricter than the first measurement requirement.

Both the third threshold and the fourth threshold are smaller than the first threshold, and the UE adopts the first RLM measurement. The first RLM measurement can have different levels of measurement requirements.

For example, if BLER_{Current} ≤ Qp1, the physical layer reports a power saving indicator 1 to the RRC layer, and the RRC layer determines that T310 is not working currently, the RLM is triggered to relax measurement conditions such as the out-of-synchronization evaluation cycle and/or the in-synchronization cycle with an scale factor a.

If BLERCurrent ≤ Qp2, where Qp1<Qᵢₙ<Qp2< Qₒᵤₜ, Qᵢₙ is the in-synchronization threshold, and Qₒᵤₜ is the out-of-synchronization threshold, the physical layer reports a power saving indicator 2 to the RRC layer, and the RRC layer determines that T310 is not working currently, the RLM is triggered to relax measurement conditions such as the out-of-synchronization evaluation cycle and/or the in-synchronization cycle with an scale factor b.

Here, a>b, that is, an evaluation cycle corresponding to factor a is more relaxed.

The first RLM measurement mentioned above has two different levels of measurement requirements. In practical applications, the first RLM measurement may have measurement requirements having greater than or equal to two different levels, and the specific implementation method is similar to the above, and will not be repeated here.

In this way, RLM measurements with different relaxation levels are realized, finer relaxation measurements are achieved, more precise power consumption control is achieved, and power of the UE is saved.

In an embodiment, an out-of-synchronization evaluation cycle required by the first measurement requirement is greater than an out-of-synchronization evaluation cycle required by the second measurement requirement.

An in-synchronous evaluation cycle required by the first measurement requirement is greater than an in-synchronous evaluation cycle required by the second measurement requirement.

A number of reference signals required by the first measurement requirement is less than a number of reference signals required by the second measurement requirement.

A frequency domain range required by the first measurement requirement is smaller than a frequency domain range required by the first measurement requirement.

The first measurement requirement can adopt a more relaxed out-of-synchronization evaluation cycle compared to the second measurement requirement, thereby reducing the detection frequency and saving power.

The first measurement requirement can adopt a more relaxed in-synchronous evaluation cycle compared to the second measurement requirement, thereby reducing the detection frequency and saving power.

The first measurement requirement can adopt a more relaxed reporting interval compared to the second measurement requirement, thereby reducing the frequency of detection and reporting, and saving power.

The reference signals can include a SSB, a CSI-RS, and/or a TRS, etc. The first measurement requirement can use a more relaxed number of measured reference signals compared to the second measurement requirement. For example, the first measurement requirement can measure the SSB only, thereby reducing the measurement load and saving power.

As an embodiment, the second measurement requirement is to reduce the number of RSs to c, and the first measurement requirement is to reduce the number of RSs to d. If c>d, the first measurement is more relaxed.

The first measurement requirement can adopt a more relaxed frequency domain range compared to the second measurement requirement. For example, the first RLM measurement can reduce the BWP of the measurement, thereby reducing the measurement load and saving power.

For example, the second measurement requirement is to reduce the BWP of the RLM measurement to BWP1, and the first measurement requirement is to reduce the BWP of the RLM measurement to BWP2. If BWP1 is greater than BWP2, the latter is more relaxed.

The following provides examples based on any of the above embodiments.
1. A terminal determines whether to perform a relaxation measurement of RLM based on a specific triggering event.
2. The specific triggering event may include but is not limited to a combination of one or more of the following triggering conditions:
   a) the BLER is lower than a certain threshold;
   b) T310 timer is not working.
3. The decision of the terminal for the specific trigger event can be carried out at the RRC layer. That is, the RRC layer performs the triggering of the terminal based on the specific trigger event, and notifies the physical layer to perform the relaxation measurement of the RLM.

Further, the triggering conditions include:
a) the BLER lower than a certain threshold, and the physical layer reporting a corresponding power saving indicator to the RRC layer;
b) the RRC layer setting a counter and a corresponding threshold.

When BLER_{Current} ≤ a certain threshold, the RRC layer receives the corresponding power saving indicator reported by the physical layer. The RRC layer also determines whether T310 is working at this time, and if so, the RRC layer triggers the relaxation measurement of the RLM. The BLER_{Current} represents a BLER corresponding to a current measured SINR value.

Further, the RRC layer may maintain a counter Np1 and may increase the Np1 by 1 after receiving the power saving indicator reported by the physical layer. When Np1 reaches the set threshold, the relaxation measurement of RLM is triggered, and Np1 returns to its default value.

4. The determination process of the terminal for the specific triggering event can be carried out at the physical layer. That is, the physical layer performs the triggering of the terminal based on the specific trigger event, and performs the relaxation measurement of RLM.
a) The threshold of the BLER can be maintained by the physical layer or obtained from a higher layer through an interlayer interface.
b) The status information of the radio link failure timer T310 can be maintained by the physical layer or obtained from the higher layer through the interlayer interface.

The physical layer obtains the status information of T310 from the RRC layer. If BLER_{Current} ≤ a certain threshold and T310 is not running, the relaxation measurement of RLM is triggered.

As an embodiment, when the physical layer determines that BLER_{Current} ≤ a certain threshold within a timer T maintained by the physical layer, the relaxation measurement of RLM is triggered, where T is a newly introduced timer (T_{RLM_delta}).

5. A method for the relaxation measurement of RLM can include at least one of the following methods:
Method 1: relaxing in the time domain, which can be a combination of one or more of the following:
scaling an evaluation cycle with a scale factor, where the evaluation cycle includes: an out-of-synchronization evaluation cycle and/or an in-synchronous evaluation cycle; or
scaling a reporting interval with a scale factor, where the reporting interval refers to a reporting cycle for reporting the IS indication and OOS indication.

As an embodiment, the evaluation cycle can be scaled using a scale factor f (f>1).

As an embodiment, the evaluation cycle and the indication cycle can be scaled using a scale factor g (g>1).

Method 2: reducing the number of reference signals (RS) measured;
As an embodiment, the types of reference signals for the RLM measurement can be limited. The reference signal can include a SSB and/or a CSI-RS.

Method 3: relaxing in the frequency domain: reducing a frequency range of the RLM measurement. The frequency range of the RLM measurement can include: RLM being in an active BWP.

6. The relaxation measurement of RLM can distinguish between different levels of relaxation.

### Method 1: a time domain level

As an embodiment, if BLER_{Current} ≤ Qp1, the physical layer reports a power saving indicator 1 to the RRC layer, and the RRC layer determines that T310 is not working currently, it is triggered that the evaluation cycle of the RLM is relaxed with the scale factor a. Further, if BLER_{Current} ≤ Qp2, where Qp1< Qᵢₙ <Qp2< Qₒᵤₜ, the physical layer reports a power saving indicator 2 to the RRC layer, and the RRC layer determines that T310 is not working currently, it is triggered that the evaluation cycle of the RLM is relaxed with the scale factor b. If a>b, the evaluation cycle corresponding to the scale factor a is more relaxed. Qp1 represents a threshold of the BLER, Qp2 represents another threshold of the BLER, Qᵢₙ represents an in-synchronization threshold, and Qₒᵤₜ represents an out-of-synchronization threshold.

### Method 2: reduction of the number of RSs

As an embodiment, the number of RSs is reduced to c or d. If c>d, the latter is more relaxed.

### Method 3: a frequency domain level

As an embodiment, relaxation 1 is reducing the BWP of the RLM measurement to BWP1, and relaxation 2 is reducing the BWP of the RLM measurement to BWP2. If BWP1 is greater than BWP2, the latter is more relaxed.

7. The terminal decides to stop the relaxation measurement of the RLM based on different triggering events, such as:
a) a BLER threshold being higher than a certain threshold;
b) the UE reporting an OOS instruction once;
c) the RRC layer T310 being running.

8. A transition period between a relaxed RLM measurement and a normal RLM measurement.

When switching from a normal mode to a relaxation mode, the UE may comply with a requirement of an RLM evaluation cycle under the normal mode before switching to the RLM measurement under the relaxation mode.

When switching from the relaxation mode to the normal mode, the UE may perform the RLM measurement according to the requirement of the normal mode when triggering the switch.

If multiple switches are made within one evaluation cycle, no requirement is defined.

9. The parameter related to specific triggering event of the terminal is determined based on network configuration or a protocol agreement.

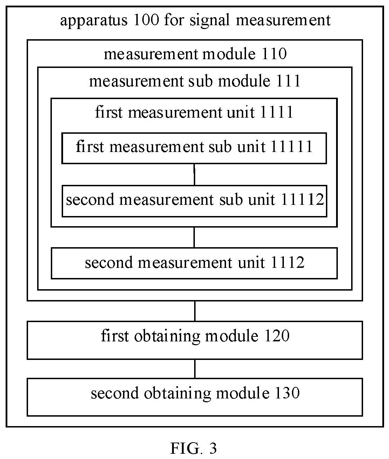

Embodiments of the disclosure further provide an apparatus for signal measurement, which can be used in a UE. As illustrated in FIG. 3, the apparatus 100 for signal measurement includes: a measurement module 110.

The measurement module is configured to perform a radio link monitoring (RLM) measurement on a radio link according to a representation parameter related to transmission quality of the radio link.

In an embodiment, the measurement module 110 includes:
a measurement sub module 111, configured to perform a first RLM measurement or a second RLM measurement on the radio link according to the representation parameter related to transmission quality of the radio link, in which a measurement requirement of the first RLM measurement is different from a measurement requirement of the second RLM measurement.

In an embodiment, the measurement sub module 111 includes one of:
a first measurement unit 1111, configured to perform the first RLM measurement in response to a block error rate (BLER) being lower than or equal to a first threshold and/or a radio link failure timer being not activated; or
a second measurement unit 1112, configured to perform the second RLM measurement in response to the BLER being higher than or equal to a second threshold, and/or the radio link failure timer being activated, and/or a predetermined number of out-of-synchronization indications being received;
in which, the first threshold is smaller than the second threshold, and the measurement requirement of the second RLM measurement is stricter than the measurement requirement of the first RLM measurement.

In an embodiment, the first measurement unit 1111 includes:
a first measurement sub unit 11111, configured to trigger a physical layer to perform the first RLM measurement in response to a radio resource control (RRC) layer receiving N indications from the physical layer, the indications indicating that the BLER is lower than or equal to the first threshold, and/or the RRC layer determining that the radio link failure timer is not activated, where N is a positive integer.

In an embodiment, the first measurement unit 1111 includes:
a second measurement sub unit 11112, configured to perform the first RLM measurement by a physical layer in response to the physical layer determining that the BLER is lower than or equal to the first threshold and/or that the radio link failure timer is not activated.

In an embodiment, the second measurement sub unit 11112 is configured to: perform the first RLM measurement by the physical layer in response to the physical layer determining that the BLER is lower than or equal to the first threshold within a predetermined period of time and/or that the radio link failure timer is not activated.

In an embodiment, the apparatus further includes at least one of:
a first obtaining module 120, configured to obtain the first threshold by the physical layer from a higher layer through an interlayer interface; or
a second obtaining module 130, configured to obtain information indicating a status of the radio link failure timer by the physical layer from the higher layer through the interlayer interface.

In an embodiment, the measurement requirement of the second RLM measurement being stricter than the measurement requirement of the first RLM measurement, includes at least one of:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

In an embodiment, the out-of-synchronization evaluation cycle of the first RLM measurement is i times the out-of-synchronization evaluation cycle of the second RLM measurement, where i is a real number greater than 1; or
the in-synchronization evaluation cycle of the first RLM measurement is j times the in-synchronization evaluation cycle of the second RLM measurement, where j is a real number greater than 1;
the reporting interval of the first RLM measurement is k times the reporting interval of the second RLM measurement, where k is a real number greater than 1.

In an embodiment, the measurement sub module 111 includes:
a third measurement unit 1113, configured to p erform the first RLM measurement with a first measurement requirement in response to the BLER being less than or equal to a third threshold; or
a fourth measurement unit 1113, configured to perform the first RLM measurement with a second measurement requirement in response to the BLER being less than or equal to a fourth threshold and less than an out-of-synchronization threshold;
in which, the third threshold is less than the fourth threshold, the fourth threshold is less than or equal to the first threshold, and the second measurement requirement is stricter than the first measurement requirement.

In an embodiment, an out-of-synchronization evaluation cycle required by the first measurement requirement is greater than an out-of-synchronization evaluation cycle required by the second measurement requirement;
an in-synchronous evaluation cycle required by the first measurement requirement is greater than an in-synchronous evaluation cycle required by the second measurement requirement;
a number of reference signals required by the first measurement requirement is less than a number of reference signals required by the second measurement requirement; or
a frequency domain range required by the first measurement requirement is smaller than a frequency domain range required by the first measurement requirement.

In exemplary embodiments, the measurement module 110, the first obtaining module 120, and the second obtaining module 130 can be implemented by one or more central processing units (CPUs), a graphics processing unit (GPU), a baseband processor (BP, baseband processor), an application specific integrated circuit (ASIC), a Digital Signal Processor (DSP), a Programmable Logic Device (PLD), a Complex Programmable Logic Device (CPLD), a Field Programmable Gate Array (FPGA), a general-purpose processor, a controller, a Micro Controller Unit (MCU), a microprocessor (Microprocessor), or other electronic component, for performing the aforementioned methods.

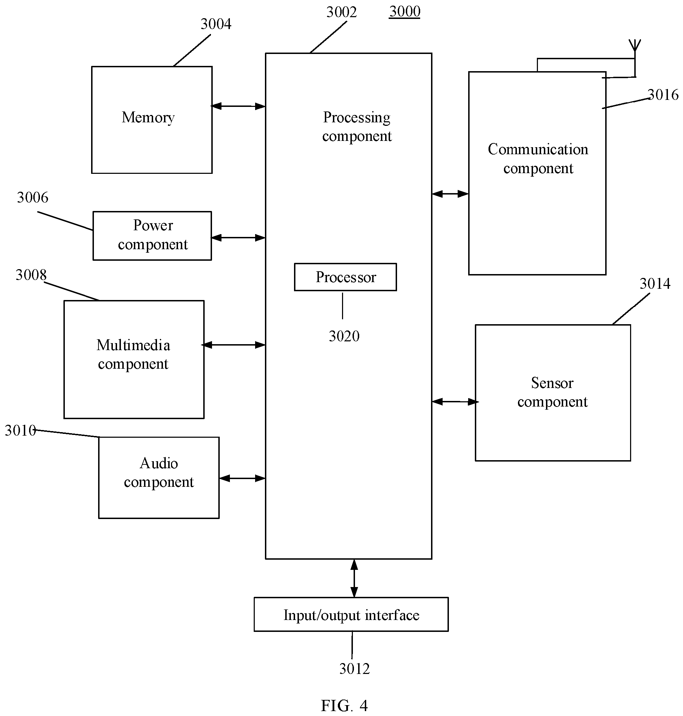

FIG. 4 is a block diagram of a device 3000 for signal measurement according to an embodiment of the disclosure. For example, the device 3000 may be a mobile phone, a computer, a digital broadcasting terminal, a message transceiver device, a game console, a tablet device, a medical device, a fitness device, and a personal digital assistant.

As illustrated in FIG. 4, the device 3000 may include at least one of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the terminal device 3000, such as the operations associated with display, telephone calls, data communications, camera operations, and recording operations. The processing component 3002 may include at least one processor 3020 to perform all or part of the steps in the above described methods. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, videos, etc. The memory 3004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time duration and a pressure associated with the touch or swipe action. In some embodiments, the multimedia component 3008 includes a front-facing camera and/or a rear-facing camera. When the device 3000 is in an operating mode, such as a shooting mode or a video mode, the front-facing camera and/or the rear-facing camera can receive external multimedia data. Each of the front-facing camera and the rear-facing camera may be a fixed optical lens system or has focal length and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of a user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a Complementary Metal Oxide Semiconductor (CMOS) or Charge-Coupled Device (CCD) image sensor, for using in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as Wi-Fi, 2G or 3G, or a combination thereof. In an embodiment, the communication component 3016 receives a broadcast signal from an external broadcast management system or broadcast associated information via a broadcast channel. In an embodiment, the communication component 3016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the embodiments, the device 3000 may be implemented by at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

In the embodiments, there is also provided a non-transitory computer readable storage medium including instructions, such as the memory 3004, executable by the processor 3020 in the device 3000, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for signal measurement, comprising:
performing a radio link monitoring (RLM) measurement on a radio link according to a representation parameter related to transmission quality of the radio link.

2. The method according to claim 1, wherein performing the RLM measurement on the radio link based on the representation parameter related to transmission quality of the radio link comprises:
performing a first RLM measurement or a second RLM measurement on the radio link according to the representation parameter related to transmission quality of the radio link, wherein a measurement requirement of the first RLM measurement is different from a measurement requirement of the second RLM measurement.

3. The method according to claim 2, wherein performing the first RLM measurement or the second RLM measurement on the radio link according to the representation parameter related to transmission quality of the radio link comprises one of:
performing the first RLM measurement in response to a block error rate (BLER) being lower than or equal to a first threshold and/or a radio link failure timer being not activated; or
performing the second RLM measurement in response to satisfying at least one of: the BLER being higher than or equal to a second threshold, the radio link failure timer being activated, or a predetermined number of out-of-synchronization indications being received;
wherein, the first threshold is smaller than the second threshold, and the measurement requirement of the second RLM measurement is stricter than the measurement requirement of the first RLM measurement.

4. The method according to claim 3, wherein performing the first RLM measurement in response to the BLER being lower than or equal to the first threshold and/or the radio link failure timer being not activated comprises:
triggering a physical layer to perform the first RLM measurement in response to a radio resource control (RRC) layer receiving N indications from the physical layer, the indications indicating that the BLER is lower than or equal to the first threshold, and/or the RRC layer determining that the radio link failure timer is not activated, where N is a positive integer.

5. The method according to claim 3, wherein performing the first RLM measurement in response to the BLER being lower than or equal to the first threshold and/or the radio link failure timer being not activated comprises:
performing the first RLM measurement by a physical layer in response to the physical layer determining that the BLER is lower than or equal to the first threshold and/or that the radio link failure timer is not activated.

6. The method according to claim 5, wherein performing the first RLM measurement by the physical layer in response to the physical layer determining that the BLER is lower than or equal to the first threshold and/or that the radio link failure timer is not activated comprises:
performing the first RLM measurement by the physical layer in response to the physical layer determining that the BLER is lower than or equal to the first threshold within a predetermined period of time and/or that the radio link failure timer is not activated.

7. The method according to claim 5, further comprising at least one of:
obtaining the first threshold by the physical layer from a higher layer through an interlayer interface; or
obtaining information indicating a status of the radio link failure timer by the physical layer from the higher layer through the interlayer interface.

8. The method according to any of claims 3 to 7, wherein the measurement requirement of the second RLM measurement being stricter than the measurement requirement of the first RLM measurement, comprises at least one of:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

9. The method according to claim 8, wherein,
the out-of-synchronization evaluation cycle of the first RLM measurement is i times the out-of-synchronization evaluation cycle of the second RLM measurement, where i is a real number greater than 1; or
the in-synchronization evaluation cycle of the first RLM measurement is j times the in-synchronization evaluation cycle of the second RLM measurement, where j is a real number greater than 1;
the reporting interval of the first RLM measurement is k times the reporting interval of the second RLM measurement, where k is a real number greater than 1.

10. The method according to any of claims 3 to 7, wherein performing the first RLM measurement in response to the BLER being lower than or equal to the first threshold and/or the radio link failure timer being not activated comprises:
performing the first RLM measurement with a first measurement requirement in response to the BLER being less than or equal to a third threshold; or
performing the first RLM measurement with a second measurement requirement in response to the BLER being less than or equal to a fourth threshold and less than an out-of-synchronization threshold;
wherein, the third threshold is less than the fourth threshold, the fourth threshold is less than or equal to the first threshold, and the second measurement requirement is stricter than the first measurement requirement.

11. The method according to claim 10, wherein,
an out-of-synchronization evaluation cycle required by the first measurement requirement is greater than an out-of-synchronization evaluation cycle required by the second measurement requirement;
an in-synchronous evaluation cycle required by the first measurement requirement is greater than an in-synchronous evaluation cycle required by the second measurement requirement;
a number of reference signals required by the first measurement requirement is less than a number of reference signals required by the second measurement requirement; or
a frequency domain range required by the first measurement requirement is smaller than a frequency domain range required by the first measurement requirement.

12. An apparatus for signal measurement, comprising a measurement module, wherein,
the measurement module is configured to perform a radio link monitoring (RLM) measurement on a radio link according to a representation parameter related to transmission quality of the radio link.

13. The apparatus according to claim 12, wherein the measurement module comprises:
a measurement sub module, configured to perform a first RLM measurement or a second RLM measurement on the radio link according to the representation parameter related to transmission quality of the radio link, wherein a measurement requirement of the first RLM measurement is different from a measurement requirement of the second RLM measurement.

14. The apparatus according to claim 13, wherein the measurement sub module comprises one of:
a first measurement unit, configured to perform the first RLM measurement in response to a block error rate (BLER) being lower than or equal to a first threshold and/or a radio link failure timer being not activated; or
a second measurement unit, configured to perform the second RLM measurement in response to the BLER being higher than or equal to a second threshold, and/or the radio link failure timer being activated, and/or a predetermined number of out-of-synchronization indications being received;
wherein, the first threshold is smaller than the second threshold, and the measurement requirement of the second RLM measurement is stricter than the measurement requirement of the first RLM measurement.

15. The apparatus according to claim 14, wherein the first measurement unit comprises:
a first measurement sub unit, configured to trigger a physical layer to perform the first RLM measurement in response to a radio resource control (RRC) layer receiving N indications from the physical layer, the indications indicating that the BLER is lower than or equal to the first threshold, and/or the RRC layer determining that the radio link failure timer is not activated, where N is a positive integer.

16. The apparatus according to claim 14, wherein the first measurement unit comprises:
a second measurement sub unit, configured to perform the first RLM measurement by a physical layer in response to the physical layer determining that the BLER is lower than or equal to the first threshold and/or that the radio link failure timer is not activated.

17. The apparatus according to claim 16, wherein the second measurement sub unit is configured to:
perform the first RLM measurement by the physical layer in response to the physical layer determining that the BLER is lower than or equal to the first threshold within a predetermined period of time and/or that the radio link failure timer is not activated.

18. The apparatus according to claim 16, further comprising at least one of:
a first obtaining module, configured to obtain the first threshold by the physical layer from a higher layer through an interlayer interface; or
a second obtaining module, configured to obtain information indicating a status of the radio link failure timer by the physical layer from the higher layer through the interlayer interface.

19. The apparatus according to any of claims 14 to 18, wherein the measurement requirement of the second RLM measurement being stricter than the measurement requirement of the first RLM measurement, comprises at least one of:
an out-of-synchronization evaluation cycle of the first RLM measurement being greater than an out-of-synchronization evaluation cycle of the second RLM measurement;
an in-synchronization evaluation cycle of the first RLM measurement being greater than an in-synchronization evaluation cycle of the second RLM measurement;
a reporting interval of the first RLM measurement being greater than a reporting interval of the second RLM measurement;
a number of reference signals measured by the first RLM measurement being less than a number of reference signals measured by the second RLM measurement; or
a frequency domain range measured by the first RLM measurement being smaller than a frequency domain range measured by the second RLM measurement.

20. The apparatus according to claim 19, wherein,
the out-of-synchronization evaluation cycle of the first RLM measurement is i times the out-of-synchronization evaluation cycle of the second RLM measurement, where i is a real number greater than 1; or
the in-synchronization evaluation cycle of the first RLM measurement is j times the in-synchronization evaluation cycle of the second RLM measurement, where j is a real number greater than 1;
the reporting interval of the first RLM measurement is k times the reporting interval of the second RLM measurement, where k is a real number greater than 1.

21. The apparatus according to any of claims 14 to 18, wherein the measurement sub module comprises:
a third measurement unit, configured to perform the first RLM measurement with a first measurement requirement in response to the BLER being less than or equal to a third threshold; or
a fourth measurement unit, configured to perform the first RLM measurement with a second measurement requirement in response to the BLER being less than or equal to a fourth threshold and less than an out-of-synchronization threshold;
wherein, the third threshold is less than the fourth threshold, the fourth threshold is less than or equal to the first threshold, and the second measurement requirement is stricter than the first measurement requirement.

22. The apparatus according to claim 21, wherein,
an out-of-synchronization evaluation cycle required by the first measurement requirement is greater than an out-of-synchronization evaluation cycle required by the second measurement requirement;
an in-synchronous evaluation cycle required by the first measurement requirement is greater than an in-synchronous evaluation cycle required by the second measurement requirement;
a number of reference signals required by the first measurement requirement is less than a number of reference signals required by the second measurement requirement; or
a frequency domain range required by the first measurement requirement is smaller than a frequency domain range required by the first measurement requirement.

23. A communication device, comprising a processor, a memory and executable programs stored on the memory and executable by the processor, wherein when the processor executes the executable programs, steps of the method for signal measurement according to any of claims 1 to 11 is performed.

24. A storage medium having executable programs stored thereon that, when executed by a processor, steps of the method for signal measurement according to any of claims 1 to 11 is performed.
